# NEUE EUROPÄISCHE PATENTSCHRIFT

(11) **EP 2 978 564 B2**
(45) Veröffentlichungstag und Bekanntmachung des Hinweises auf die Entscheidung über den Einspruch: **02.03.2022**
(45) Hinweis auf die Patenterteilung: 07.03.2018
(21) Anmeldenummer: 14717997.2
(22) Anmeldetag: 28.03.2014
(51) Int. Cl.: B23P 11/00, F01L 1/047, F16H 53/02

(54) **SPANNNEST MIT FIXIERELEMENTEN**
CLAMPING NEST HAVING FIXING ELEMENTS
CAGE DE SERRAGE POURVUE D'ÉLÉMENTS DE FIXATION

(30) Priorität: 30.03.2013 DE 102013005713
(43) Veröffentlichungstag der Anmeldung: 03.02.2016
(73) Patentinhaber: ThyssenKrupp Presta TecCenter AG, 9492 Eschen (LI)
(72) Erfinder: ROGATSCH, Thomas, A-6800 Feldkirch (AT); MUSTER, Manfred, A-6713 Ludesch (AT)
(74) Vertreter: thyssenkrupp Intellectual Property GmbH
(86) Internationale Anmeldenummer: PCT/EP2014/000839
(87) Internationale Veröffentlichungsnummer: WO 2014/161649

(56) Entgegenhaltungen:
- EP-A1- 0 278 676
- WO-A1-2004/079163
- WO-A1-2014/161649
- DE-A1- 3 227 693
- DE-A1-102008 064 194
- DE-A1-102009 060 349
- DE-A1-102009 060 350
- DE-A1-102010 045 047
- DE-A1-102010 055 123
- DE-A1-102011 052 819
- DE-A1-102011 106 981
- DE-B3-102004 060 807
- JP-A- S6 297 722
- JP-A- H06 114 653
- KR-B1- 101 101 862
- US-B1- 6 802 111
- "Die Bibliothek der Technik", Verlag Moderne Industrie, 2003, XP055535919,

## Beschreibung

Bei der Herstellung von Nockenwellen werden unterschiedliche Bauteile separat hergestellt und auf eine vorgefertigte Welle gefügt. Zum Fügen werden die Bauteile auf der Welle axial auf eine Aufweitung der Welle bewegt. Dies wird typischerweise mit einem als Spannnest bezeichneten Werkzeug durchgeführt. Ein derartiges Werkzeug ist aus der DE 102009060349 A1 bekannt. Mit dem dort als Ausrichteinheit bezeichneten Werkzeug wird das Bauteil gegriffen und entlang der Welle, d.h. in axialer Richtung, bewegt. Zusätzlich weist die Ausrichteinheit verschiedene Elemente auf, mit denen die Winkelposition des Bauteils eingestellt wird. In axialer Richtung weist die dort gezeigte Ausrichteinheit nur einen Anschlag auf mit dem das Bauteil formschlüssig in axialer Richtung fixiert ist. Das Bauteil kann also mit der Ausrichteinheit nur in einer axialen Richtung bewegt werden. Nach Befestigung des Bauteils wird die Ausrichteinheit in die entgegengesetzte axiale Richtung bewegt, bis sie vom Bauteil getrennt ist und dann entfernt werden kann. Bei heutigen Motoren ist der Bauraum auf und um die Nockenwelle herum jedoch stark begrenzt. Eine Bewegung in axialer Richtung zum Entfernen des Werkzeuges ist daher nicht immer möglich. Die DE 102009060350 offenbart die Merkmale des Oberbegriffes des Anspruchs 1.

Aufgabe der vorliegenden Erfindung ist es daher, ein Spannnest zur Verfügung zu stellen, das nach Montage des Bauteils in radialer Richtung entfernt werden kann. Diese Aufgabe wird gelöst mit einem Spannnest mit den Merkmalen des Anspruchs 1. Durch die beiden gegenüber liegenden Auflageflächen wird erreicht, dass das Bauteil sicher im gabelförmigen Bereich gehalten wird und das Spannnest nach Montage in radialer Richtung entfernt werden kann. Zusätzlich hat dieser Aufbau den Vorteil, dass das Bauteil während der Montage mit Hilfe des Spannestes in beide axialen Richtungen bewegt werden kann.
Im Sinne dieser Anmeldung wird unter der axialen Richtung die Richtung verstanden, in die sich die Welle erstreckt. Es handelt sich somit um die Richtung der Rotationsachse der Welle. Auf ein Bauteil bezogen ist dies also die Richtung der Symmetrieachse der kreiszylindrischen Ausnehmung zur Aufnahme der Welle.
Unter der radialen Richtung wird jede Richtung verstanden, die senkrecht auf der axialen Richtung steht.

Häufig handelt es sich bei dem Bauteil um einen Nocken. Das Bauteil weist dann mindestens einen sich radial von der Welle weg erstreckenden Fortsatz auf. Andere Bauteile wie Sensorräder sind ebenfalls möglich.

Bei einer weitergebildeten Ausbildungsform ist die Mehrzahl der Spannelemente derart angeordnet, dass das Bauteil in einer Orientierung aufgenommen werden kann, bei der der Fortsatz im Wesentlichen entlang der Gabelachse zum Spannnest hin zeigt. Dies ermöglicht eine besonders schlanke Ausgestaltung des Spannnests in eine Richtung, die senkrecht zur Gabelachse und senkrecht zur axialen Richtung verläuft.

Bei einigen Herstellungsverfahren für Nockenwellen wird das Bauteil zunächst in der Nähe einer Aufweitung der Welle positioniert und dann mittels des Spannnests auf diese Aufweitung aufgepresst, sodass das Bauteil dort fixiert ist. Bei der Aufweitung kann es sich insbesondere um eine Rollierung handeln. Für dieses Aufpressen ist ein größerer Kraftaufwand erforderlich. Daher ist es vorteilhaft, wenn die Auflageflächen derart massiv ausgeführt sind, dass das Bauteil mittels des Spannnests auf eine Aufweitung der Welle aufgepresst werden kann.

Weiterhin ist es vorteilhaft, wenn mindestens eine der zwei Auflageflächen ein Fixierelement auf der, der anderen Auflagefläche zugewandten, Seite umfasst, um die Axialposition des Bauteils zwischen den Auflageflächen durch einen Presssitz zu fixieren. Das Fixierelement kann z.B. durch eine Blattfeder gebildet sein, die beim Einschieben des Bauteils in das Spannnest zusammen gedrückt wird und somit das Bauteil auf die gegenüber liegende Auflagefläche drückt. Alternativ kann das Fixierelement auch durch einen flexiblen Kunststoff gebildet werden, der ebenfalls beim Einschieben des Bauteils in das Spannnest zusammen gedrückt wird und somit das Bauteil in Richtung auf die gegenüber liegende Auflagefläche drückt. Die typischerweise aus einem Metall hergestellte Blattfeder hat den zusätzlichen Vorteil, dass sie unempfindlicher gegen hohe Temperaturen ist, die beim Fügeprozess auftreten können.

Bei einigen Ausführungsformen ist mindestens eines der Spannelemente als Kugellager ausgeführt. Dies hat den Vorteil, dass im Vergleich zu einem einstückigen Spannelement die Reibung des Spannnests reduziert ist. Reibung tritt zum Beispiel auf, wenn das Bauteil mit Hilfe der Spannelemente durch eine Art Trichtereffekt in eine vorbestimmte Winkelposition gedreht wird, wie weiter unten beschrieben. Hierbei gleitet die Oberfläche des Bauteils an den Spannelementen entlang. Aufgrund von Reibung kann es also zu einem Verschleiß des Spannnestes kommen. Dies wird durch die erfindungsgemäßen Kugellager reduziert.

Erfindungsgemäß wird eine der beiden Auflageflächen des Spannnestes durch einen verstellbaren Schieber gebildet, der in radialer Richtung zwischen einer Verspannstellung und einer Aufnahmestellung bewegt werden kann. In der Verspannstellung begrenzen der Schieber und die andere Auflagefläche die Axialposition des Bauteils in beide axialen Richtungen. Dagegen ist der Schieber in der Aufnahmestellung im Vergleich zur Verspannstellung vom gabelseitigen Ende des Spannnests zurückgezogen. Die Axialposition des Bauteils wird in der Aufnahmestellung also nur in eine axiale Richtung formschlüssig festgelegt. Die Ausbildung der einen Auflagefläche als Schieber ermöglicht es, das Bauteil in axialer Richtung in das Spannnest einzulegen während sich der Schieber in der Aufnahmestellung befindet. Nachdem der Schieber dann in die Verspannstellung gebracht wurde, wird die Axialposition des Bauteils in beide axialen Richtungen formschlüssig festgelegt, sodass das Bauteil in beide axialen Richtungen auf der Welle bewegt werden kann. Nachdem das Bauteil in axiale Richtung an die gewünschte Position der Welle bewegt wurde, wird es dort befestigt. Bei einigen Verfahren erfolgt die Befestigung und Bewegung in einem Schritt, indem das Bauteil auf eine Aufweitung der Welle aufgepresst wird. Nach Befestigung des Bauteils auf der Welle kann der Schieber in die Aufnahmestellung bewegt werden, sodass das Spannnest entweder in axiale Richtung entfernt werden kann oder in radiale Richtung oder durch eine kombinierte Axial/-radialbewegung, wie weiter unten erläutert wird. Dies ermöglicht somit einen besonders flexiblen Einsatz des erfindungsgemäßen Spannnests.

Vorteilhaft ist mindestens ein erstes Spannelement aus der Mehrzahl der Spannelemente mit dem Schieber verbunden und ein zweites Spannelement aus der Mehrzahl der Spannelemente mit der gegenüber liegenden Auflagefläche der beiden Auflagenflächen. Beim Bewegen des Schiebers in die Verspannstellung wird somit der radiale Abstand des ersten Spannelements und des zweiten Spannelements verkleinert. Ein zuvor eingelegtes Bauteil wird durch das Verkleinern dieses Abstandes mit dem ersten Spannelement und dem zweiten Spannelement in Kontakt gebracht und somit in radialer Richtung fixiert, also zwischen dem ersten und dem zweiten Spannelement eingeklemmt. Bei einer bevorzugten Weiterbildung sind das erste Spannelement und das zweite Spannelement derart ausgebildet und positioniert, dass in der Verspannstellung die Winkelposition des Bauteils innerhalb des gabelförmigen Bereichs festgelegt ist. Neben einer formschlüssigen Fixierung des Bauteils in axialer Richtung durch die beiden gegenüber liegenden Auflageflächen und einer formschlüssigen Fixierung in radialer Richtung durch das erste Spannelement und das zweite Spannelement wird also zusätzlich eine Verdrehung des Bauteils um die axiale Richtung durch das erste Spannelement und das zweite Spannelement verhindert. Da die Winkelposition von Bauteilen, insbesondere von Nocken, auf einer Welle wichtig für die spätere Motorsteuerung ist, ist es erforderlich, dass es im Montageprozess nicht zu ungewollten Verdrehungen der Bauteile kommt. Darüberhinaus gibt es spezielle Montageprozesse, die ein axiales Verdrehen der Bauteile um die axiale Richtung beinhalten. So kann es vorteilhaft sein, gegebenenfalls im Anschluss an eine vorübergehende Vorpositionierung, die Bauteile auf eine Aufweitung der Welle zu fügen und an dieser Position dann axial zu verdrehen. Durch die Reibung zwischen Welle und Bauteilen kommt es zu Diffusionsprozessen der beiden Kontaktflächen. Auf diese Weise erhöht sich das von der Welle auf das Bauteil übertragbare Drehmoment. Mit dem erfindungsgemäßen Spannnest kann also nicht nur eine ungewollte Verdrehung verhindert werden, sondern zusätzlich eine gewollte Verdrehung herbeigeführt werden, indem das Bauteil mit Hilfe des Spannestes nach dem Aufpressen um die axiale Richtung verdreht wird.

Eine besonders gute Fixierung in radialer Richtung lässt sich erreichen, wenn das erste Spannelement so weit vom gabelseitigen Ende des Schiebers beabstandet ist, dass es in der Verspannstellung am Fortsatz des Bauteils angreift und das zweite Spannelement so nah am gabelseitigen Ende der anderen Auflagefläche angeordnet ist, dass es in der Verspannstellung am Zentralteil angreift.

Um das Verdrehen des Bauteils um die axiale Richtung in beide Richtungen zu verhindern, weist das Spannnest vorteilhaft zwei erste Spannelemente aus der Mehrzahl der Spannelemente auf, die beide mit dem Schieber verbunden sind und soweit vom gabelseitigen Ende des Schiebers beabstandet sind, dass sie in der Verspannstellung am Fortsatz des Bauteils angreifen, und zueinander einen derartigen Abstand haben, dass der Fortsatz des Bauteils in der Verspannstellung zwischen den beiden ersten Spannelementen zu liegen kommt.

Bei der zuvor beschriebenen Montage, die eine Verdrehung des Bauteils um die axiale Richtung beinhaltet, werden relativ hohe Kräfte über das Bauteil übertragen. Daher ist es vorteilhaft, wenn die Kräfte gleichmäßig in das Bauteil eingebracht werden. Um dies zu erreichen, weist das Spannelement vorteilhaft zwei zweite Spannelemente aus der Mehrzahl der Spannelemente auf, die beide mit der, dem Schieber gegenüberliegenden, Auflagefläche verbunden sind. Dabei sind die beiden zweiten Spannelemente so nah am gabelseitigen Ende angeordnet, dass sie in der Verspannstellung in jeweiligen Kontaktbereichen am Zentralteil des Bauteils angreifen, wobei der Abstand der beiden Kontaktbereiche zwischen 50° und 130°, insbesondere zwischen 70° und 110°, bezogen auf die Rotationsachse der Welle beträgt. Die Angriffspunkte der Kräfte beim Verdrehen werden somit über den Umfang des Bauteils verteilt.

Bei einer besonders bevorzugten Variante der Erfindung sind das erste Spannelement und das zweite Spannelement derart ausgebildet und positioniert, dass ein aufgenommenes Bauteil durch Bewegung des Schiebers von der Aufnahmestellung in die Verspannstellung in eine vorbestimmte Winkelposition gedreht wird. Das mit dem Schieber verbundene erste Spannelement bewirkt sozusagen eine Art Trichtereffekt beim Bewegen des Schiebers von der Aufnahmestellung in die Verspannstellung. Während dieses Verdrehens stützt sich das Bauteil auf dem zweiten Spannelement ab. Diese Anordnung hat den Vorteil, dass das Bauteil nicht präzise in das Spannnest eingelegt werden muss, sondern dass hier eine Winkelungenauigkeit toleriert werden kann. Die erforderliche präzise Winkeljustage wird dann automatisch beim Bewegen des Schiebers in die Verspannstellung durchgeführt. Dies vereinfacht den Montageprozess erheblich.

Bei einigen Ausführungsformen weist das zweite Spannelement in axialer Richtung eine Ausdehnung auf, die kleiner ist als der Abstand der gegenüber liegenden Auflageflächen. Auf diese Weise ist es einfacher, dass Spannnest nach der Montage zu entfernen. Bei den Ausführungsformen, bei denen das zweite Spannelement so nahe am gabelseitigen Ende der dem Schieber gegenüber liegenden Auflagefläche angeordnet ist, kann das Spannnest nach Bringen des Schiebers in die Aufnahmestellung nicht unbedingt sofort in radialer Richtung entfernt werden. Je nach genauer Anordnung des zweiten Spannelements kann es sein, dass ein Formschluss zwischen dem zweiten Spannelement und Bauteil vorliegt, der verhindert, dass das Spannnest in radialer Richtung entfernt wird. Daher bewegt man bei diesen Fällen das Spannnest zunächst in axialer Richtung, bis kein Formschluss in radialer Richtung zwischen dem Bauteil und allen Spannelementen des Spannnests mehr vorliegt und entfernt dann das Spannnest in radialer Richtung. Je geringer die Ausdehnung des zweiten Spannelements in axialer Richtung ist, desto weniger muss auch das Spannnest in axialer Richtung bewegt werden, bis kein Formschluss in radialer Richtung mehr vorliegt. Die Variante, bei der das zweite Spannelement in axialer Richtung also eine Ausdehnung ausweist, die kleiner ist als der Abstand der gegenüber liegenden Auflageflächen, hat somit den Vorteil, dass ein geringerer Bauraum in axialer Richtung erforderlich ist, um das Spannnest nach der Montage des Bauteils zu entfernen.
Die Erfindung betrifft ebenfalls ein Verfahren zum Positionieren und Fügen eines Bauteils auf eine Welle mittels eines Spannnests nach einem der Ansprüche 1 bis 15, das die folgenden Schritte umfasst:
a) Bereitstellen eines Bauteils mit einer kreiszylindrischen Ausnehmung
b) Aufnehmen des Bauteils im gabelförmigen Bereich des Spannnests
c) Einbringen einer Welle mit mind. einer Aufweitung in die Ausnehmung
d) Aufpressen des Bauteils auf die Aufweitung mittels des Spannnests
e) Abnehmen des Spannnests in radialer Richtung
Weiterhin betrifft die Erfindung auch ein Verfahren zum Positionieren und Fügen eines Bauteils auf einer Welle mittels eines Spannnests nach einem der Ansprüche 1 bis 15, wobei das Verfahren die folgenden Schritte umfasst:
a) Bereitstellen eines Bauteils mit einer kreiszylindrischen Ausnehmung
b) Bereitstellen des Spannnests in der Aufnahmestellung
c) Aufnehmen des Bauteils im gabelförmigen Bereich des Spannnests
d) Bewegen des Schiebers in radialer Richtung zur Welle hin, sodass das Spannnest in die Verspannstellung gebracht wird
e) Einbringen einer Welle mit mind. einer Aufweitung in die Ausnehmung
f) Aufpressen des Bauteils auf die Aufweitung mittels des Spannnests
g) Bewegen des Schiebers in radialer Richtung von der Welle weg, sodass das Spannnest in die Aufnahmestellung gebracht wird
h) Bewegen des Spannnests in axialer Richtung, bis kein Formschluss in radialer Richtung zwischen dem Bauteil und allen Spannelementen des Spannnests vorliegt
i) Abnehmen des Spannnests in radialer Richtung

Die beiden Verfahren haben die Vorteile, die bereits zuvor im Hinblick auf das Spannnest selbst beschrieben wurden.

Näher erläutert wird die Erfindung anhand der Figuren. Es zeigen
Figur 1a eine Aufsicht entlang einer axialen Richtung auf ein erfindungsgemäßes Spannnest mit einem Schieber in der Verspannstellung.
Figur 1b eine Aufsicht entlang einer axialen Richtung auf ein erfindungsgemäßes Spannnest mit einem Schieber in der Aufnahmestellung.
Figur 2 eine dreidimensionale Darstellung des Spannnests mit Schieber in der Verspannstellung.
Figur 3 eine weitere dreidimensionale Darstellung des Spannnests mit Schieber in der Verspannstellung.
Figur 4 eine Aufsicht entlang einer radialen Richtung auf ein erfindungsgemäßes Spannnest mit einem Schieber in der Verspannstellung.
Figur 5 einen Querschnitt durch ein nicht erfindungsgemäßes Spannnest ohne Schieber.
Figur 6 eine dreidimensionale Darstellung eines nicht erfindungsgemäßen Spannnests ohne Schieber.
Figur 7a eine schematische Darstellung des Aufpressens eines Bauteils auf eine Aufweitung.
Figur 7b eine schematische Darstellung der Winkeljustage eines Bauteils auf eine Aufweitung einer Welle.
Figur 7c eine schematische Darstellung des gekoppelten Vorgangs von Winkeleinstellung und Aufpressen.

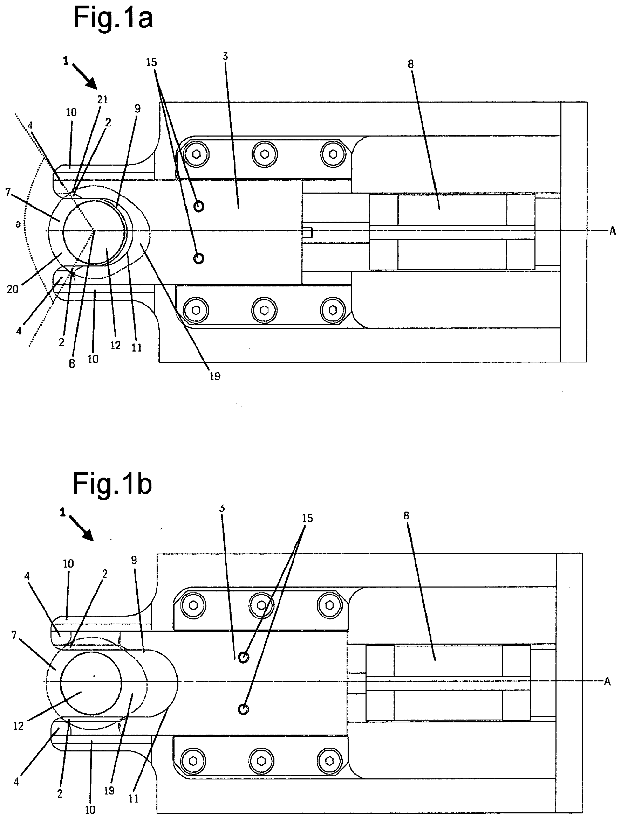

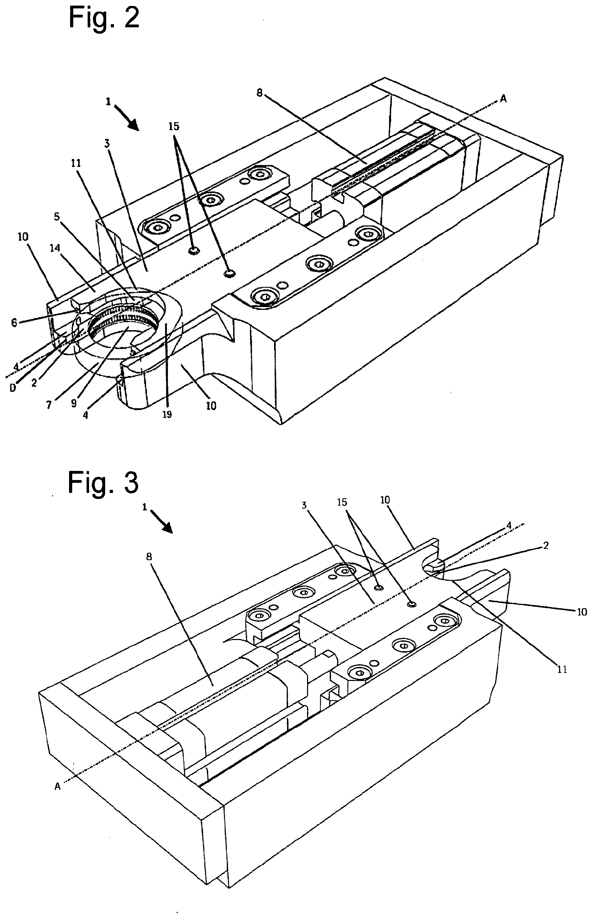

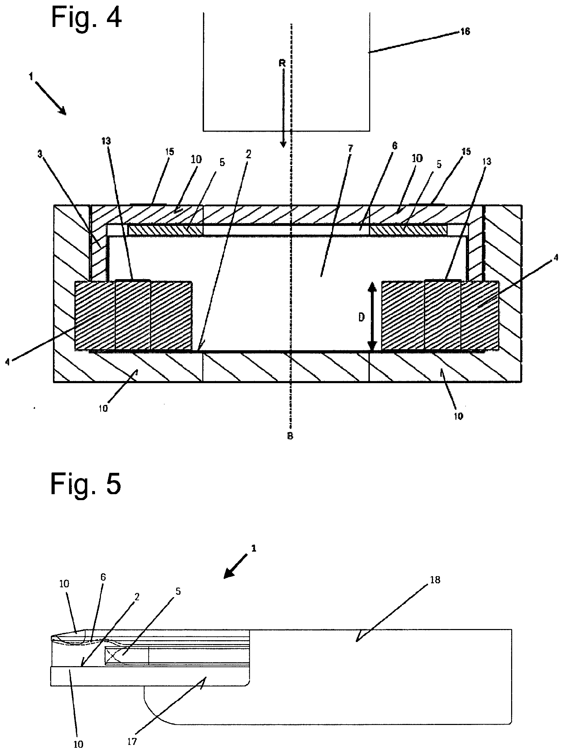

In Figur 1a ist eine Aufsicht entlang einer axialen Richtung auf ein erfindungsgemäßes Spannnest 1 dargestellt. Die axiale Richtung ist zum Beispiel in Figur 4 dargestellt und dort mit R bezeichnet. Das Spannnest 1 umfasst eine Auflagefläche 2 und eine gegenüberliegende Auflagefläche, die durch den Schieber 3 gebildet ist. Der Schieber 3 weist eine Ausnehmung 11 auf und die gegenüberliegende Auflagefläche 2 weist eine Ausnehmung 9 auf, sodass sich insgesamt ein gabelförmiger Bereich 10 zur Aufnahme des Bauteils 7 ergibt. Die Gabelachse wird dabei mit A bezeichnet. In den dargestellten Figuren wird das Bauteil 7 durch einen Nocken repräsentiert. Es sind jedoch auch andere Bauteile, wie z.B. Sensorräder, möglich. Das Bauteil 7 weist eine kreiszylindrische Ausnehmung 12 und einen sich radial von der Welle weg erstreckenden Fortsatz 19 auf. Die Auflagefläche 2 und die durch den Schieber 3 gebildete gegenüber liegende Auflagefläche legen die Axialpositionen des Bauteils 7 in beide axialen Richtungen formschlüssig fest. Der Schieber 3 kann in Richtung der Gabelachse A, das heißt in radialer Richtung, zwischen einer Verspannstellung und einer Aufnahmestellung bewegt werden. Mit dem Schieber 3 sind zwei erste Spannelemente 5 verbunden, die soweit vom gabelseitigen Ende des Schiebers 3 beabstandet sind, dass sie in der Figur 1a dargestellten Verspannstellung am Fortsatz 19 des Bauteils 7 angreifen. Aufgrund der Darstellung sind die Spannelemente 5 in Figur 1a durch den Schieber 3 verdeckt. In der perspektivischen Darstellung von Figur 2 sind diese jedoch zu erkennen. Mit der Auflagefläche 2 sind zwei zweite Spannelemente 4 verbunden, die am gabelseitigen Ende der Auflagefläche 2 angeordnet sind. Die ersten Spannelemente 5 und die zweiten Spannelemente 4 sind derart ausgebildet und positioniert, dass diese in der Verspannstellung die Winkelposition des Bauteils 7 innerhalb des gabelförmigen Bereiches 10 festlegen.
Beide zweiten Spannelemente 4 greifen am Zentralteil 20 des Bauteils 7 an die jeweiligen Kontaktbereiche 21 an. Die beiden Kontaktbereiche 21 haben einen Winkelabstand a bezogen auf die Rotationsachse B der Welle, der im vorliegenden Fall beispielsweise ca. 100° beträgt. Die ersten Spannelemente 5 und die zweiten Spannelemente 4 sind derart angeordnet, dass das Bauteil 7 in einer Orientierung aufgenommen werden kann, bei der der Fortsatz 19 im Wesentlichen entlang der Gabelachse A zum Spannnest 1 hin zeigt. Zudem haben die beiden ersten Spannelemente 5 einen derartigen Abstand zueinander, dass der Fortsatz 19 des Bauteils 7 in der Verspannstellung zwischen den beiden ersten Spannelementen 5 zu liegen kommt.

Figur 1b zeigt das erfindungsgemäße Spannnest 1 in der Aufnahmestellung. Der Schieber 3 ist in diesem Fall im Vergleich zur Verspannstellung vom gabelseitigen Ende des Verspannnests 1 zurückgezogen. Hierzu weist das Spannnest 1 eine Verstelleinheit 8 auf. Während die zweiten Spannelemente 4 bei der dargestellten Ausführungsform einstückig mit der Auflagefläche 2 ausgebildet sind, sind die ersten Spannelemente 5 über Befestigungselemente 15 mit dem Schieber 3 verbunden. Alternativ können auch die zweiten Spannelemente 4 separat ausgeführt sein und über Befestigungselemente 13 mit der Auflagefläche 2 verbunden werden. Dies ist z.B. in Figur 4 dargestellt. Bei Figur 4 handelt es sich um eine Ansicht des erfindungsgemäßen Spannnests 1 entlang einer radialen Richtung. Man schaut sozusagen frontal in den gabelförmigen Bereich 10 hinein. Die zweiten Spannelemente 4 sind hier durch Kugellager gebildet, die mittels Befestigungselementen 13 mit der Auflagefläche 2 verbunden sind. In Figur 4 ist ferner einer Welle 16 mit einer Rotationsachse B dargestellt, die entlang der axialen Richtung R in die kreiszylindrische Ausnehmung 12 des Bauteils 7 eingefügt wird. Aufgrund der Blickrichtung in den gabelförmigen Bereich 10 entlang der Gabelachse A (gezeigt in Figur 3) ist in Figur 4 nun auch das Fixierelement 6 erkennbar, bei dem es sich hier um eine Blattfeder handelt. Das Fixierelement 6 gehört zur vom Schieber 3 gebildeten Auflagefläche und dient dazu, die Axialposition des Bauteils zwischen der Auflagefläche 2 und dem Schieber 3 durch einen Presssitz zu fixieren. Hierzu ist die Blattfeder 6 auf der Seite des Schiebers 3 angeordnet, die der Auflagefläche 2 zugewandt ist. Beim Schließen des Schiebers 3, d.h. beim Bewegen des Schiebers 3 von der Aufnahmestellung in die Verspannstellung, stützt sich das Bauteil 7 an den zweiten Spannelementen 4 ab. Daher wird die Blattfeder 6 zusammen gedrückt und übt eine Kraft auf das Bauteil 7 in axialer Richtung R aus. Dies fixiert die Axialposition des Bauteils 7 zwischen der Auflagefläche 2 und dem Schieber 3 in Form eines Presssitzes. Gleichzeitig greifen die ersten Spannelemente 5 auf beiden Seiten des Fortsatzes 19 an, so dass das Bauteil 7 eingeklemmt wird (siehe Figur 2). Durch das Schließen des Schiebers wird der Fortsatz 19 des Bauteils 7 zudem zwischen den beiden ersten Spannelementen 5 zentriert. Selbst wenn das Bauteil 7 also nicht mit korrekter Winkelposition eingelegt wurde, wird es durch Schließen des Schiebers 3 in die vorbestimmte Winkelposition gedreht.

Nach Befestigen des Bauteils 7 auf der Welle 16 wird der Schieber 3 in radialer Richtung von der Welle 16 weg bewegt, so dass das Spannnest 1 wieder in die Aufnahmestellung gebracht wird. Das Spannnest 1 kann nun nicht ohne weiteres in radialer Richtung abgenommen werden, da aufgrund der Ausdehnung D der zweiten Spannelemente 4 ein Formschluss zwischen Spannnest 1 und Bauteil 7 vorliegt. Daher wird das Spannnest 1 zunächst in axialer Richtung bewegt, bis kein Formschluss in radialer Richtung mehr vorliegt, da die zweiten Spannelemente 4 in axialer Richtung eine Ausdehnung D aufweisen, die kleiner ist als der Abstand der gegenüberliegenden Auflageflächen 2, 3. Somit kann das Spannnest 1 auch bei geringen Arbeitsabständen verwendet werden. Anschließend wird das Spannnest 1 in radialer Richtung abgenommen.

Figur 5 zeigt einen Längsschnitt durch ein nicht erfindungsgemäßes Spannnest 1 ohne Schieber.

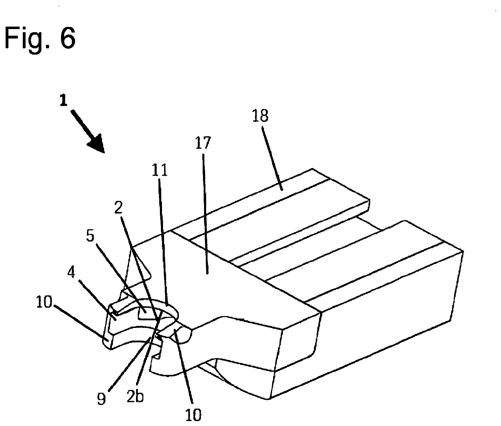

Figur 6 zeigt eine entsprechende dreidimensionale Darstellung des gleichen Spannnests 1 ohne Schieber. Das Spannnest 1 umfasst ein Kopfteil 17 und ein Trägerelement 18. Das Kopfteil 17 hat einen gabelförmigen Bereich 10 zur Aufnahme eines Bauteils. Weiterhin weist der gabelförmige Bereich 10 zwei sich gegenüber liegende Auflageflächen 2 und 2b auf, die die Axialposition des Bauteils in beide axialen Richtungen formschlüssig festlegen. Die Winkelposition des Bauteils innerhalb des gabelförmigen Bereichs 10 wird durch die Mehrzahl von Spannelementen 4 und 5 festgelegt. Die Mehrzahl der Spannelemente 4,5 umfasst dabei zwei erste Spannelemente 5, die soweit vom gabelseitigen Ende des Spannnests 1 beabstandet sind, dass sie am Fortsatz des Bauteils angreifen, und zwei zweite Spannelemente 4, die so nahe am gabelseitigen Ende angeordnet sind, dass sie am Zentralteil des Bauteils angreifen. Die in Figur 5 oben dargestellte Auflagefläche 2b umfasst ein Fixierelement auf der der anderen Auflagefläche 2 zugewandten Seite, um die Axialposition des Bauteils zwischen den beiden Auflageflächen 2,2b durch einen Presssitz zu fixieren. Beim Einschieben des Bauteils in den gabelförmigen Bereich 10 wird das Fixierelement, das im vorliegenden Fall durch eine Blattfeder 6 gebildet wird, zusammen gedrückt und die Blattfeder 6 fixiert, dann das Bauteil zwischen den beiden Auflageflächen, in denen sie das Bauteil auf die Auflagefläche 2 presst.

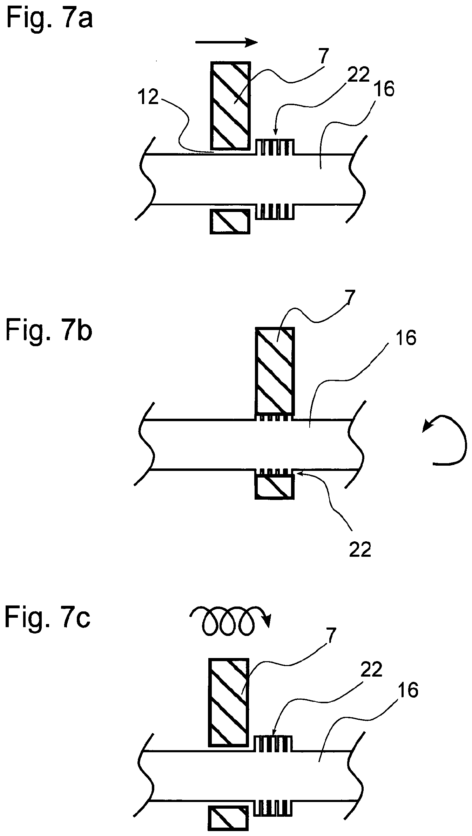

Die Figuren 7a - 7c zeigen schematisch verschiedene Varianten, ein Bauteil 7 auf der Welle 16 zu befestigen. Die Welle 16 weist jeweils eine Aufweitung 22 auf, deren Durchmesser größer ist als der Innendurchmesser der kreiszylindrischen Ausnehmung 12 des Bauteils. Mittels des nicht in den Figuren 7a - 7c dargestellten Spannnests wird das Bauteil auf die Aufweitung 22 aufgepresst. Die Aufweitung 22 ist im vorliegenden Fall als eine Rollierung ausgeführt. Wie in Figur 7b durch den gebogenen Pfeil angedeutet, ist es bei einigen Ausführungsformen hilfreich, das Bauteil 7 an der endgültigen Axialposition relativ zur Welle 16 zu verdrehen. Hierdurch wird die Festigkeit des Sitzes erhöht und somit ein höheres übertragbares Drehmoment gewährleistet. Diese Drehung des Bauteils relativ zur Welle 16 kann besonders gut mit Hilfe des erfindungsgemäßen Spannnests durchgeführt werden. Durch den verdrehfesten Sitz des Bauteils 7 innerhalb des Spannnests, der durch die Mehrzahl der Spannelemente bewirkt wird, kann ein hohes Drehmoment auf das Bauteil übertragen werden und so das Bauteil 7 relativ zur Welle 16 verdreht werden. Bei der in Figur 7c angedeuteten Variante wird das Verdrehen des Bauteils gleichzeitig mit dem Aufpressen auf die Aufweitung 22 durchgeführt. Dies ist durch den schraubenförmigen Pfeil angedeutet.

## Patentansprüche

1. Spannnest (1) zum Positionieren und Fügen eines Bauteils (7) auf einer Welle (16), wobei das Bauteil (7) einen Zentralteil (20) mit einer kreiszylindrischen Ausnehmung (12) zur Aufnahme der Welle (16) aufweist,
wobei das Spannnest (1) einen gabelförmigen Bereich (10) zur Aufnahme des Bauteils (7) aufweist und wobei der gabelförmige Bereich (10) eine Mehrzahl von Spannelementen (4, 5) umfasst, die die Winkelposition des Bauteils (7) innerhalb des gabelförmigen Bereiches (10) festlegen
wobei
der gabelförmige Bereich (10) zwei gegenüberliegende Auflageflächen (2, 2b) umfasst, die die Axialposition des Bauteils (7) in beide axialen Richtungen formschlüssig festlegen, **dadurch gekennzeichnet, dass** eine der beiden Auflageflächen (2, 2b) durch einen verstellbaren Schieber (3) gebildet wird, der in radialer Richtung zwischen einer Verspannstellung und einer Aufnahmestellung bewegt werden kann.

2. Spannnest nach Anspruch 1,
**dadurch gekennzeichnet, dass**
die Auflageflächen (2, 2b) derart ausgeführt sind, dass das Bauteil (7) mittels des Spannnestes (1) in beide axialen Richtungen entlang der Welle (16) bewegt werden kann.

3. Spannnest nach einem der Ansprüche 1-2,
**dadurch gekennzeichnet, dass**
das Bauteil (7) mindestens einen sich radial von der Welle (16) weg erstreckenden Fortsatz (19) aufweist und die Mehrzahl der Spannelemente (4, 5) derart angeordnet ist, dass das Bauteil (7) in einer Orientierung aufgenommen werden kann, bei der Fortsatz (19) im Wesentlichen entlang der Gabelachse (A) zum Spannest (1) hin zeigt.

4. Spannnest nach einem der Ansprüche 1 bis 3,
**dadurch gekennzeichnet, dass**
die Auflageflächen (2, 2b) derart massiv ausgeführt sind, dass das Bauteil (7) mittels des Spannnests (1) auf eine Aufweitung (22) der Welle (16) aufgepresst werden kann.

5. Spannnest nach einem der Ansprüche 1 bis 4,
**dadurch gekennzeichnet, dass**
mindestens eine der zwei Auflageflächen (2b) ein Fixierelement (6) auf der, der anderen Auflagefläche (2) zugewandten, Seite umfasst, um die Axialposition des Bauteils (7) zwischen den Auflageflächen (2, 2b) durch einen Presssitz zu fixieren.

6. Spannnest nach Anspruch 5,
**dadurch gekennzeichnet, dass**
das Fixierelement (6) eine Blattfeder oder ein flexibler Kunststoff ist.

7. Spannnest nach einem der Ansprüche 1 bis 6,
**dadurch gekennzeichnet, dass**
mindestens eines der Spannelemente (4, 5) als Kugellager ausgeführt ist.

8. Spannnest nach einem der Ansprüche 1 bis 7,
**dadurch gekennzeichnet, dass**
geänderte Patentansprüche in der Verspannstellung der Schieber (3) und die andere Auflagefläche (2) die Axialposition des Bauteils (7) in beide axialen Richtungen formschlüssig begrenzen und in der Aufnahmestellung der Schieber (3) im Vergleich zur Verspannstellung vom gabelseitigen Ende des Spannnestes (1) zurückgezogen ist.

9. Spannnest nach einem der Ansprüche 1 bis 8,
**dadurch gekennzeichnet, dass**
mindestens ein erstes Spannelement (5) aus der Mehrzahl der Spannelemente mit dem Schieber (3) verbunden ist und ein zweites Spannelement (4) aus der Mehrzahl der Spannelemente (4, 5) mit der gegenüberliegenden Auflagefläche (2) der beiden Auflageflächen verbunden ist.

10. Spannnest nach Anspruch 9,
**dadurch gekennzeichnet, dass**
das erste Spannelement (5) und das zweite Spannelement (4) derart ausgebildet und positioniert sind, dass in der Verspannstellung die Winkelposition des Bauteils (7) innerhalb des gabelförmigen Bereiches (10) festlegt ist.

11. Spannnest nach Anspruch 10,
**dadurch gekennzeichnet, dass**
das Bauteil (7) mindestens einen sich radial von der Welle (16) weg erstreckenden Fortsatz (19) aufweist und das erste Spannelement (5) soweit vom gabelseitigen Ende des Schiebers (3) beabstandet ist, dass es In der Verspannstellung am Fortsatz (19) des Bauteils (7) angreift, und das zweite Spannelement (4) so nahe am gabelseitigen Ende der anderen Auflagefläche (2) angeordnet ist, dass es in der Verspannstellung am Zentralteil (20) angreift.

12. Spannnest nach einem der Anspruche 1 bis 11,
**dadurch gekennzeichnet, dass**
das Bauteil (7) mindestens einen sich radial von der Welle (16) weg erstreckenden Fortsatz (19) aufweist und das Spannnest (1) zwei erste Spannelemente (5) aus der Mehrzahl der Spannelemente umfasst, wobei beide ersten Spannelemente (5) mit dem Schieber (3) verbunden sind und soweit vom gabelseitigen Ende des Schiebers (3) beabstandet sind, dass sie in der Verspannstellung am Fortsatz (19) des Bauteils (7) angreifen, und wobei sie zueinander einen derartigen Abstand haben, dass der Fortsatz (19) des Bauteils (7) in der Verspannstellung zwischen den beiden ersten Spannelementen (5) zu liegen kommt.

13. Spannnest nach einem der Anspruche 1 bis 12,
**dadurch gekennzeichnet, dass**
das Spannest zwei zweite Spannelemente (4) aus der Mehrzahl der Spannelemente (4, 5) umfasst, wobei beide zweiten Spannelemente (4) mit der, dem Schieber (3) gegenüberliegenden, Auflagefläche (2) verbunden sind und so nahe am gabelseitigen Ende angeordnet sind, dass sie in der Verspannstellung in jeweiligen Kontaktbereichen (21) am Zentralteil (20) des Bauteiles angreifen, und wobei der Abstand der beiden Kontaktbereiche (21) zwischen 50° und 130° bezogen auf die Rotationsachse der Welle (16) beträgt.

14. Spannnest nach Anspruch 9 bis 13,
**dadurch gekennzeichnet, dass**
das erste Spannelement (5) und das zweite Spannelement (4) derart ausgebildet und positioniert sind, dass ein aufgenommenes Bauteil (7) durch Bewegen des Schiebers (3) von der Aufnahmestellung in die Verspannstellung in eine vorbestimmte Winkelposition gedreht wird.

15. Spannnest nach einem der Ansprüche 11 bis 14,
**dadurch gekennzeichnet, dass**
das zweite Spannelement (4) in axialer Richtung eine Ausdehnung aufweist, die kleiner ist als der Abstand der gegenüberliegenden Auflageflächen (2, 2b).

16. Verfahren zum Positionieren und Fügen eines Bauteils (7) auf einer Welle (16) mittels eines Spannnestes (1) nach einem der Ansprüche 1 bis 15 umfassend die folgenden Schritte:
a. Bereitstellen eines Bauteils (7) mit einer kreiszylindrischen Ausnehmung (12)
b. Aufnehmen des Bauteils (7) im gabelförmigen Bereich (10) des Spannnestes
c. Einbringen einer Welle (16) mit mindestens einer Aufweitung (22) in die Ausnehmung (12)
d. Aufpressen des Bauteils (7) auf die Aufweitung (22) mittels des Spannnestes (1)
e. Abnehmen des Spannnestes (1) in radialer Richtung

17. Verfahren zum Positionieren und Fügen eines Bauteils (7) auf einer Welle mittels eines Spannnestes nach einem der Ansprüche 1 bis 15 umfassend die folgenden Schritte:
a. Bereitstellen eines Bauteils (7) mit einer kreiszylindrischen Ausnehmung (12)
b. Bereitstellen des Spannestes (1) in der Aufnahmestellung
c. Aufnehmen des Bauteils (7) im gabelförmigen Bereich (10) des Spannnestes (1)
d. Bewegen des Schiebers (3) in radialer Richtung zur Welle (16) hin, so dass das Spannnest (1) in die Verspannstellung gebracht wird
e. Einbringen einer Welle mit mindestens einer Aufweitung (22) in die Ausnehmung (12)
f. Aufpressen des Bauteils (7) auf die Aufweitung (22) mittels des Spannnestes (1)
g. Bewegen des Schiebers (3) in radialer Richtung von der Welle (16) weg, so dass das Spannnest (1) in die Aufnahmestellung gebracht wird
h. Bewegen des Spannnestes in axialer Richtung bis kein Formschluss in radialer Richtung zwischen dem Bauteil (7) und allen Spannelementen (4, 5) des Spannnestes (1) mehr vorliegt
i. Abnehmen des Spannnestes (1) in radialer Richtung

## Claims

1. Clamping nest (1) for positioning a component (7) on a shaft (16) and joining it thereto, wherein the component (7) has a central part (20) with a circular-cylindrical aperture (12) for accommodating the shaft (16),
wherein the clamping nest (1) has a fork-shaped region (10) for accommodating the component (7) and wherein the fork-shaped region (10) comprises a plurality of clamping elements (4, 5), which secure the angled position of the component (7) within the fork-shaped region (10),
wherein
the fork-shaped region (10) comprises two opposite bearing surfaces (2, 2b), which secure the axial position of the component (7) in a form-fitting manner in both axial directions,
**characterized in that** one of the two bearing surfaces (2, 2b) is formed by an adjustable slide (3), which can be moved in the radial direction between a bracing position and an accommodating position.

2. Clamping nest according to Claim 1,
**characterized in that**
the bearing surfaces (2, 2b) are configured such that the component (7) can be moved in both axial directions along the shaft (16) by means of the clamping nest (1).

3. Clamping nest according to either of Claims 1 and 2,
**characterized in that**
the component (7) has at least one extension (19), which extends radially away from the shaft (16), and the plurality of clamping elements (4, 5) are arranged such that the component (7) can be accommodated in an orientation in which the extension (19) is oriented essentially along the fork axis (A) in the direction of the clamping nest (1).

4. Clamping nest according to one of Claims 1 to 3,
**characterized in that**
the bearing surfaces (2, 2b) are configured such massive that the component (7) can be pressed onto a widened portion (22) of the shaft (16) by means of the clamping nest (1).

5. Clamping nest according to one of Claims 1 to 4,
**characterized in that**
at least one of the two bearing surfaces (2b) comprises a fixing element (6) on the side directed toward the other bearing surface (2), in order to fix the axial position of the component (7) between the bearing surfaces (2, 2b) by a press fit.

6. Clamping nest according to Claim 5,
**characterized in that**
the fixing element (6) is a leaf spring or a flexible plastics material.

7. Clamping nest according to one of Claims 1 to 6,
**characterized in that**
at least one of the clamping elements (4, 5) is configured in the form of a ball bearing.

8. Clamping nest according to one of Claims 1 to 7,
**characterized in that**,
in the bracing position, the slide (3) and the other bearing surface (2) delimit the axial position of the component (7) in a form-fitting manner in both axial directions and, in the accommodating position, the slide (3), in comparison with the bracing position, is drawn back from the fork end of the clamping nest (1).

9. Clamping nest according to one of Claims 1 to 8,
**characterized in that**
at least one first clamping element (5) of the plurality of clamping elements is connected to the slide (3) and a second clamping element (4) of the plurality of clamping elements (4, 5) is connected to the opposite bearing surface (2) of the two bearing surfaces.

10. Clamping nest according to Claim 9,
**characterized in that**
the first clamping element (5) and the second clamping element (4) are designed, and positioned, such that, in the bracing position, the component (7) has a secure angled position within the fork-shaped region (10).

11. Clamping nest according to Claim 10,
**characterized in that**
the component (7) has at least one extension (19), which extends radially away from the shaft (16), and the first clamping element (5) is spaced apart from the fork end of the slide (3) to the extent where, in the bracing position, it acts on the extension (19) of the component (7), and the second clamping element (4) is arranged in such proximity to the fork end of the other bearing surface (2) that, in the bracing position, it acts on the central part (20).

12. Clamping nest according to one of Claims 1 to 11,
**characterized in that**
the component (7) has at least one extension (19), which extends radially away from the shaft (16), and the clamping nest (1) comprises two first clamping elements (5) of the plurality of clamping elements, wherein the two first clamping elements (5) are connected to the slide (3) and are spaced apart from the fork end of the slide (3) to the extent where, in the bracing position, they act on the extension (19) of the component (7), and wherein they are spaced apart from one another by such a distance that the extension (19) of the component (7), in the bracing position, ends up located between the two first clamping elements (5) .

13. Clamping nest according to one of Claims 1 to 12,
**characterized in that**
the clamping nest comprises two second clamping elements (4) of the plurality of clamping elements (4, 5), wherein the two second clamping elements (4) are connected to the bearing surface (2), which is located opposite the slide (3), and are arranged in such proximity to the fork end that, in the bracing position, they act on the central part (20) of the component in respective contact regions (21), and wherein the distance between the two contact regions (21) is between 50° and 130°, as seen in relation to the axis of rotation of the shaft (16).

14. Clamping nest according to Claims 9 to 13, **characterized in that**
the first clamping element (5) and the second clamping element (4) are designed, and positioned, such that a component (7) accommodated therein is rotated into a predetermined angled position by virtue of the slide (3) being moved from the accommodating position into the bracing position.

15. Clamping nest according to one of Claims 11 to 14,
**characterized in that**
the second clamping element (4), in the axial direction, has an extent which is smaller than the distance between the opposite bearing surfaces (2, 2b) .

16. Method of positioning a component (7) on a shaft (16), and joining it thereto, by means of a clamping nest (1) according to one of Claims 1 to 15, comprising the following steps:
a.Supplying a component (7) which has a circular-cylindrical aperture (12)
b.Accommodating the component (7) in the fork-shaped region (10) of the clamping nest
c.Introducing a shaft (16), which has at least one widened portion (22), into the aperture (12)
d.Pressing the component (7) onto the widened portion (22) by means of the clamping nest (1)
e.Removing the clamping nest (1) in the radial direction.

17. Method of positioning a component (7) on a shaft, and joining it thereto, by means of a clamping nest according to one of Claims 1 to 15, comprising the following steps:
a.Supplying a component (7) which has a circular-cylindrical aperture (12)
b.Supplying the clamping nest (1) in the accommodating position
c.Accommodating the component (7) in the fork-shaped region (10) of the clamping nest (1)
d.Moving the slide (3) radially in the direction of the shaft (16) so that the clamping nest (1) is moved into the bracing position,
e.Introducing a shaft, which has at least one widened portion (22), into the aperture (12)
f.Pressing the component (7) onto the widened portion (22) by means of the clamping nest (1)
g.Moving the slide (3) radially away from the shaft (16) so that the clamping nest (1) is moved into the accommodating position
h.Moving the clamping nest in the axial direction until there is no longer any form fit present in the radial direction between the component (7) and all the clamping elements (4, 5) of the clamping nest (1).
i.Removing the clamping nest (1) in the radial direction.

## Revendications

1. Cage de serrage (1) pour le positionnement et l'assemblage d'un composant (7) sur un arbre (16), le composant (7) présentant une partie centrale (20) avec un évidement cylindrique circulaire (12) pour recevoir l'arbre (16),
la cage de serrage (1) présentant une région en forme de fourche (10) pour recevoir le composant (7) et la région en forme de fourche (10) comprenant une pluralité d'éléments de serrage (4, 5) qui fixent la position angulaire du composant (7) à l'intérieur de la région en forme de fourche (10),
la région en forme de fourche (10) comprenant deux surfaces d'appui opposées (2, 2b) qui fixent la position axiale du composant (7) par engagement par correspondance de formes dans les deux directions axiales,
**caractérisée en ce que** l'une des deux surfaces d'appui (2, 2b) est formée par un coulisseau déplaçable (3) qui peut être déplacé dans la direction radiale entre une position de serrage et une position de réception.

2. Cage de serrage selon la revendication 1,
**caractérisée en ce que**
les surfaces d'appui (2, 2b) sont réalisées de telle sorte que le composant (7) puisse être déplacé au moyen de la cage de serrage (1) dans les deux directions axiales le long de l'arbre (16) .

3. Cage de serrage selon l'une quelconque des revendications 1 à 2,
**caractérisée en ce que**
le composant (7) présente au moins une saillie (19) s'étendant radialement à l'écart de l'arbre (16) et la pluralité d'éléments de serrage (4, 5) est disposée de telle sorte que le composant (7) puisse être reçu dans une orientation dans laquelle la saillie (19) est tournée essentiellement vers la cage de serrage (1) le long de l'axe (A) de la fourche.

4. Cage de serrage selon l'une quelconque des revendications 1 à 3,
**caractérisée en ce que**
les surfaces d'appui (2, 2b) sont réalisées de telle sorte massife que le composant (7) puisse être pressé au moyen de la cage de serrage (1) sur un élargissement (22) de l'arbre (16).

5. Cage de serrage selon l'une quelconque des revendications 1 à 4,
**caractérisée en ce que**
au moins l'une des deux surfaces d'appui (2b) comprend un élément de fixation (6) sur le côté tourné vers l'autre surface d'appui (2), afin de fixer par ajustement serré la position axiale du composant (7) entre les surfaces d'appui (2, 2b).

6. Cage de serrage selon la revendication 5,
**caractérisée en ce que**
l'élément de fixation (6) est un ressort à lame ou un plastique flexible.

7. Cage de serrage selon l'une quelconque des revendications 1 à 6,
**caractérisée en ce que**
au moins l'un des éléments de serrage (4, 5) est réalisé sous forme de roulement à billes.

8. Cage de serrage selon l'une quelconque des revendications 1 à 7,
**caractérisée en ce que**
dans la position de serrage, le coulisseau (3) et l'autre surface d'appui (2) délimitent par engagement par correspondance de formes la position axiale du composant (7) dans les deux directions axiales et, dans la position de réception, le coulisseau (3) est en retrait par rapport à l'extrémité côté fourche de la cage de serrage (1) par comparaison avec la position de serrage.

9. Cage de serrage selon l'une quelconque des revendications 1 à 8,
**caractérisée en ce**
**qu'**au moins un premier élément de serrage (5) parmi la pluralité des éléments de serrage est relié au coulisseau (3) et un deuxième élément de serrage (4) parmi la pluralité des éléments de serrage (4, 5) est relié à la surface d'appui opposée (2) des deux surfaces d'appui.

10. Cage de serrage selon la revendication 9,
**caractérisée en ce que**
le premier élément de serrage (5) et le deuxième élément de serrage (4) sont réalisés et positionnés de telle sorte que dans la position de serrage, la position angulaire du composant (7) à l'intérieur de la région en forme de fourche (10) soit fixée.

11. Cage de serrage selon la revendication 10,
**caractérisée en ce que**
le composant (7) présente au moins une saillie (19) s'étendant radialement à l'écart de l'arbre (16) et le premier élément de serrage (5) est espacé de l'extrémité côté fourche du coulisseau (3) de telle sorte que dans la position de serrage, il vienne en prise contre la saillie (19) du composant (7), et le deuxième élément de serrage (4) est disposé tellement près de l'extrémité côté fourche de l'autre surface d'appui (2) qu'il vienne en prise dans la position de serrage sur la partie centrale (20).

12. Cage de serrage selon l'une quelconque des revendications 1 à 11,
**caractérisée en ce que**
le composant (7) présente au moins une saillie (19) s'étendant radialement à l'écart de l'arbre (16) et la cage de serrage (1) comprend deux premiers éléments de serrage (5) parmi la pluralité d'éléments de serrage, les deux premiers éléments de serrage (5) étant reliés au coulisseau (3) et étant espacés de l'extrémité côté fourche du coulisseau (3) de telle sorte qu'ils viennent en prise dans la position de serrage avec la saillie (19) du composant (7), ceux-ci étant espacés l'un de l'autre d'une distance telle que la saillie (19) du composant (7) vienne se placer, dans la position de serrage, entre les deux premiers éléments de serrage (5).

13. Cage de serrage selon l'une quelconque des revendications 1 à 12,
**caractérisée en ce que**
la cage de serrage comprend deux deuxièmes éléments de serrage (4) parmi la pluralité des éléments de serrage (4, 5), les deux deuxièmes éléments de serrage (4) étant reliés à la surface d'appui (2) opposée au coulisseau (3) et étant disposés tellement près de l'extrémité côté fourche qu'ils viennent en prise avec la partie centrale (20) du composant dans la position de serrage dans des régions de contact respectives (21), et la distance des deux régions de contact (21) étant comprise entre 50° et 130° par rapport à l'axe de rotation de l'arbre (16).

14. Cage de serrage selon les revendications 9 à 13,
**caractérisée en ce que**
le premier élément de serrage (5) et le deuxième élément de serrage (4) sont réalisés et positionnés de telle sorte qu'un composant reçu (7) soit tourné dans une position angulaire prédéterminée par déplacement du coulisseau (3) de la position de réception dans la position de serrage.

15. Cage de serrage selon l'une quelconque des revendications 11 à 14,
**caractérisée en ce que**
le deuxième élément de serrage (4) présente, dans la direction axiale, une étendue qui est inférieure à la distance entre les surfaces d'appui opposées (2, 2b).

16. Procédé pour le positionnement et l'assemblage d'un composant (7) sur un arbre (16) au moyen d'une cage de serrage (1) selon l'une quelconque des revendications 1 à 15, comprenant les étapes suivantes :
a. fourniture d'un composant (7) avec un évidement cylindrique circulaire (12),
b. réception du composant (7) dans la région en forme de fourche (10) de la cage de serrage,
c. insertion d'un arbre (16) avec au moins un élargissement (22) dans l'évidement (12),
d. pressage du composant (7) sur l'élargissement (22) au moyen de la cage de serrage (1),
e. enlèvement de la cage de serrage (1) dans la direction radiale.

17. Procédé pour le positionnement et l'assemblage d'un composant (7) sur un arbre au moyen d'une cage de serrage selon l'une quelconque des revendications 1 à 15, comprenant les étapes suivantes :
a. fourniture d'un composant (7) avec un évidement cylindrique circulaire (12),
b. fourniture de la cage de serrage (1) dans la position de réception,
c. réception du composant (7) dans la région en forme de fourche (10) de la cage de serrage (1),
d. déplacement du coulisseau (3) dans la direction radiale vers à l'arbre (16) de telle sorte que la cage de serrage (1) soit amenée dans la position de serrage,
e. insertion d'un arbre avec au moins un élargissement (22) dans l'évidement (12),
f. pressage du composant (7) sur l'élargissement (22) au moyen de la cage de serrage (1),
g. déplacement du coulisseau (3) dans la direction radiale à l'écart de l'arbre (16) de telle sorte que la cage de serrage (1) soit amenée dans la position de réception,
h. déplacement de la cage de serrage dans la direction axiale jusqu'à ce qu'il n'existe plus aucun engagement par correspondance de formes dans la direction radiale entre le composant (7) et tous les éléments de serrage (4, 5) de la cage de serrage (1),
i. enlèvement de la cage de serrage (1) dans la direction radiale.
